# DEMANDE DE BREVET EUROPEEN

(11) **EP 1 536 165 A1**
(43) Date de publication de la demande: **01.06.2005**
(21) Numéro de dépôt: 04023856.0
(22) Date de dépôt: 07.10.2004
(51) Int. Cl.: F16J 15/08, F16J 15/12

(54) **Stoppeur adaptable et joint de culasse équipé dudit stoppeur**

(30) Priorité: 27.11.2003 FR 0350922
(71) Demandeur: Carl Freudenberg KG, 69469 Weinheim (DE)
(72) Inventeur: Ulmer, Georges, 87000 Limoges (FR)

(57) **Abrégé**

L'objet de l'invention est un joint de culasse susceptible d'être disposé entre un bloc moteur et une culasse, comprenant plusieurs feuilles ou tôles empilées avec au moins une ouverture (32) susceptible de coïncider avec une chambre de combustion et au moins un orifice (34) prévu pour des moyens de serrage ainsi qu'une surépaisseur, appelée par la suite stoppeur (30) entourant ladite ouverture (32), caractérisé en ce que le stoppeur (30) a une résistance à la déformation variable le long de sa circonférence.

## Description

La présente invention se rapporte à un stoppeur adaptable ainsi qu'à un joint de culasse équipé dudit stoppeur.

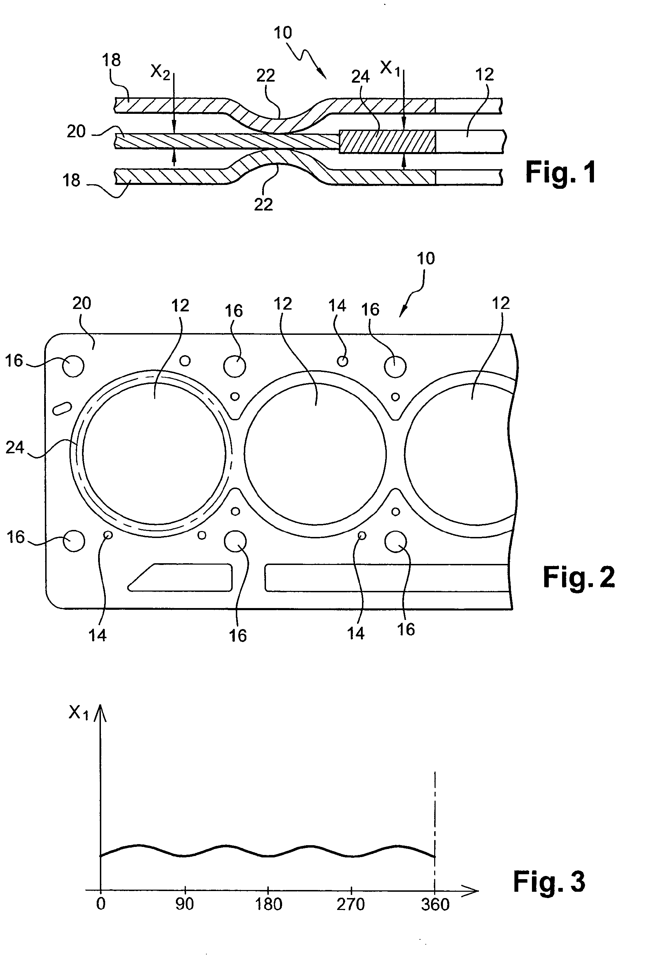

Un joint de culasse est utilisé pour assurer l'étanchéité entre un bloc moteur et une culasse. Comme illustré sur la figure 2, un joint de culasse 10 a généralement la forme du bloc moteur, notamment rectangulaire, et comprend une pluralité d'ouvertures, permettant d'assurer la continuité entre des cavités ou des conduits disposés d'une part dans le bloc moteur, et d'autre part dans la culasse. Ainsi, des premières ouvertures 12 sont prévues pour les chambres à combustion, des deuxièmes ouvertures 14 pour les conduits du ou des fluides de refroidissement et des troisièmes ouvertures 16 pour permettre le passage d'éléments de fixation de la culasse sur le bloc moteur, notamment des tiges filetées. Ainsi, le joint de culasse doit assurer une bonne étanchéité entre les conduits entre eux et entre les conduits et l'extérieur malgré les défauts géométriques des surfaces en contact du bloc moteur et de la culasse et les variations de température.

Selon un mode de réalisation répandu et illustré par la figure 1, un joint de culasse 10 comprend plusieurs feuilles ou tôles empilées, notamment deux tôles extérieures 18 actives entre lesquelles est disposée une tôle intercalaire 20. Au moins l'une des tôles extérieures 18 comporte une nervure 22 autour des premières ouvertures 12, à proximité desdites ouvertures, orientée vers l'intérieur du joint, afin d'obtenir une zone déformable permettant de compenser les déformations du joint. Ainsi, lorsque des nervures 22 sont prévues sur les deux tôles extérieures 18, les parties en saillie desdites nervures sont disposées en vis à vis et orientées l'une vers l'autre ou en opposition.

Pour améliorer l'étanchéité, ledit joint 10 comprend une cale 24 appelée stoppeur, disposée en périphérie des premières ouvertures 12 prévues pour les chambres de combustion et bord à bord avec la tôle intercalaire 20. Ce stoppeur 24 a une épaisseur X1 légèrement supérieure à l'épaisseur X2 de la tôle intercalaire 20 permettant d'une part d'obtenir un effort de serrage plus élevé autour des chambres de combustion, et d'autre part, d'obtenir une précontrainte d'au moins une des tôles extérieures 18 réduisant l'amplitude de débattement et l'écrasement des nervures.

Selon cet agencement, les efforts de serrage générés par les moyens de serrage passant par les orifices 16 ne sont pas uniformément répartis sur la surface globale du joint, mais ont tendance à être localisés autour des orifices 16. Aussi, pour obtenir une pression satisfaisante au niveau des zones les plus éloignées des orifices 16, il est nécessaire de prévoir une pression de serrage supérieure à celle qui est normalement nécessaire dans les zones localisées autour des orifices 16.

Ces variations de pression de serrage sont réellement problématiques dans les zones d'étanchéité, notamment au niveau du stoppeur 24.

Ainsi, le fait d'avoir des efforts de serrage localisés génère une variation de pression de serrage le long de la circonférence du stoppeur 24. Pour obtenir une pression de contact satisfaisante, et par conséquence une étanchéité satisfaisante, quel que soit le point de la circonférence du stoppeur, les zones les plus proches des orifices 16 subissent une pression de serrage supérieure à celle nécessaire, pour obtenir une pression de serrage satisfaisante dans les zones les plus éloignées desdits orifices 16. Les pressions de serrage n'étant pas identiques le long de la circonférence, elles génèrent des contraintes et des déformations localisées, ou variables dans le plan du stoppeur, au niveau de la culasse et du bloc moteur, notamment au niveau des chemises, susceptibles de provoquer une consommation excessive d'huile et une augmentation du niveau sonore du moteur.

Pour obtenir une pression de serrage plus homogène le long de la circonférence du stoppeur et donc des déformations moindres, une solution consiste à prévoir un stoppeur 24 à épaisseur X1 variable le long de la circonférence, comme illustré sur la figure 3. Ainsi, les zones du stoppeur susceptibles d'être disposées au droit des orifices 16 ont une épaisseur X1 inférieure à celle des zones les plus éloignées des orifices 16.

Même si cette solution permet d'obtenir des déformations moins importantes, elle ne donne pas pleinement satisfaction car la variation d'épaisseur du stoppeur nécessite une opération d'estampage délicate. Par ailleurs, on note que la variation d'épaisseur est définie à la fabrication du joint et elle est identique quel que soit le joint si bien qu'elle n'est pas adaptée à la géométrie spécifique de chaque bloc moteur et joint de culasse.

Aussi, la présente invention vise à pallier les inconvénients de l'art antérieur en proposant un joint de culasse équipé d'un stoppeur adaptable.

A cet effet, l'invention a pour objet un joint de culasse susceptible d'être disposé entre un bloc moteur et une culasse, comprenant plusieurs feuilles ou tôles empilées avec au moins une ouverture susceptible de coïncider avec une chambre de combustion et au moins un orifice prévu pour des moyens de serrage ainsi qu'une surépaisseur appelée par la suite stoppeur entourant ladite ouverture, caractérisé en ce que le stoppeur a une résistance à la déformation variable le long de sa circonférence.

Cette caractéristique permet d'avoir un profil de stoppeur qui s'adapte d'une part aux efforts de serrage, et d'autre part, aux formes des éléments entre lesquels ledit stoppeur est interposé. Cette caractéristique permet d'obtenir des déformations relativement moins importantes par rapport aux solutions existantes tout en procurant une excellente étanchéité.

D'autres caractéristiques et avantages ressortiront de la description qui va suivre de l'invention, description donnée à titre d'exemple uniquement, en regard des dessins annexés sur lesquels:
- la figure 1 est une coupe transversale d'une partie d'un joint de culasse selon l'art antérieur,
- la figure 2 est une vue de dessus d'un joint de culasse selon l'art antérieur,
- la figure 3 est une représentation de la variation d'épaisseur d'un stoppeur selon l'art antérieur,
- les figures 4A à 4C sont des coupes de différentes variantes de joints de culasse incorporant un stoppeur selon l'invention,
- la figure 5 est une vue de dessus d'une première variante d'un stoppeur selon l' invention,
- la figure 6 est une vue de dessus d'une deuxième variante d'un stoppeur selon l'invention, représenté positionné par rapport à une tôle intercalaire,
- la figure 7 est une section du stoppeur et de la tôle intercalaire selon la ligne VII-VII de la figure 6, et
- la figure 8 est une section du stoppeur et de la tôle intercalaire selon la ligne VIII-VIII de la figure 6.

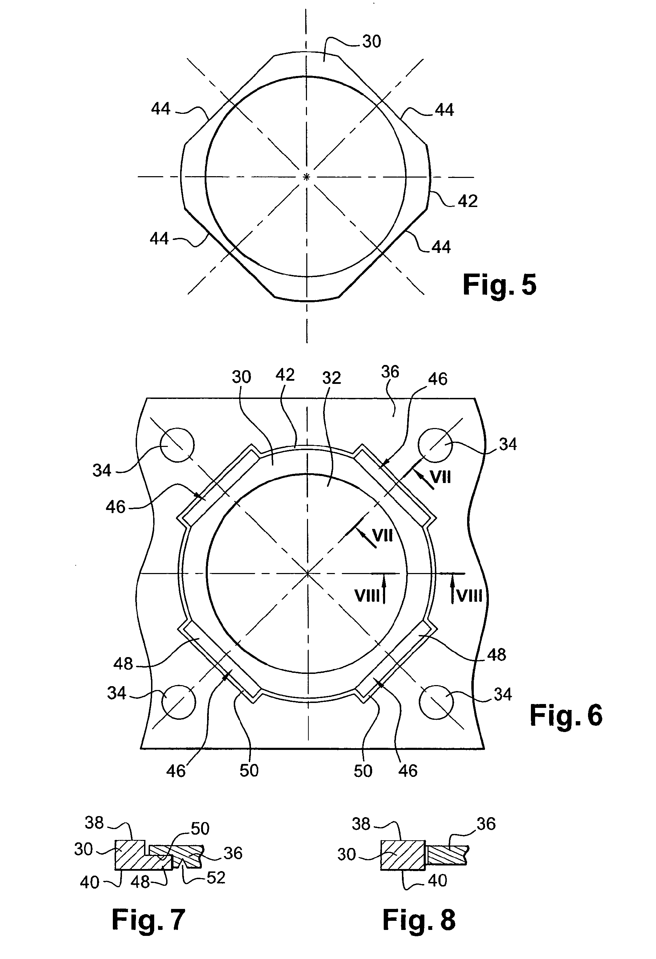

Sur les figures 5 et 6, on a représenté en 30 un stoppeur susceptible d'être incorporé dans un joint de culasse comprenant plusieurs feuilles ou tôles empilées, ledit joint étant susceptible d'être interposé entre un bloc moteur et une culasse.

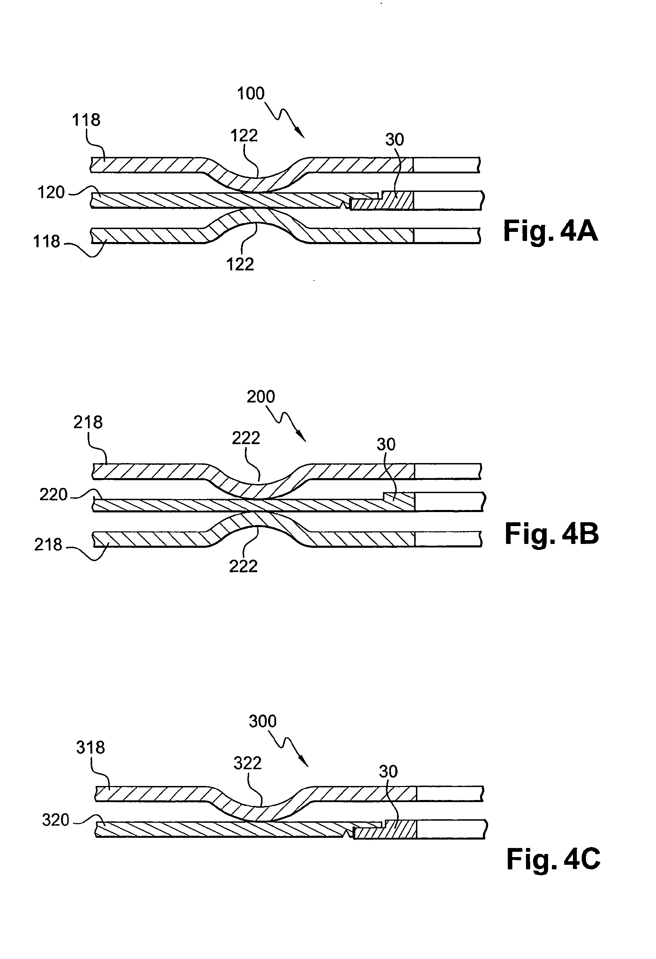

A titre d'exemples, on a représenté sur les figures 4A à 4C, trois variantes d'un joint de culasse, d'autres variantes étant envisageables.

Les éléments communs avec l'art antérieur ont les mêmes références augmentées de 100, de 200 et de 300 respectivement pour la première variante de joint de culasse 100 illustrée à la figure 4A, pour la deuxième variante de joint de culasse 200 illustrée à la figure 4B et pour la troisième variante de joint de culasse 300 illustrée à la figure 4C.

Ainsi, le joint de culasse 100 de la figure 4A comprend deux tôles extérieures 118 actives entre lesquelles est disposée une tôle intercalaire 120, au moins l'une des tôles extérieures 118 comportant une nervure 122 autour des ouvertures susceptibles de coïncider avec les chambres de combustion. Selon ce mode de réalisation, le stoppeur 30 de l'invention est disposé bord à bord avec la tôle intercalaire 120.

Le joint de culasse 200 de la figure 4B comprend également deux tôles extérieures 218 actives entre lesquelles est disposée une tôle intercalaire 220, au moins l'une des tôles extérieures 218 comportant une nervure 222 autour des ouvertures susceptibles de coïncider avec les chambres de combustion. Selon ce mode de réalisation, la tôle intercalaire 220 comprend une surépaisseur formant stoppeur 30 selon l' invention, la tôle intercalaire et le stoppeur étant réalisés d'un seul tenant.

Le joint de culasse 300 de la figure 4C comprend un seule tôle actives 318 avec une nervure 322 autour des ouvertures susceptibles de coïncider avec les chambres de combustion. Dans ce mode de réalisation, une autre tôle 320 est prévue, sur laquelle est rapporté un stoppeur 30 selon l'invention. On pourrait envisager une autre variante avec une tôle 320 et un stoppeur 30 d'un seul tenant.

D'autres variantes sont envisageables.

De manière connue, le joint de culasse comprend une pluralité d'ouvertures permettant d'assurer la continuité entre des cavités ou des conduits ménagés dans ledit bloc moteur et ladite culasse. Ainsi, comme illustré sur la figure 6, le joint de culasse comprend notamment des premières ouvertures 32 prévues pour les chambres à combustion et des deuxièmes ouvertures 34 prévues pour permettre le passage d'éléments de fixation de la culasse sur le bloc moteur, notamment des tiges filetées, assurant l'effort de serrage.

Pour décrire l'invention, sur la figure 6, on a représenté le stoppeur 30 disposé en périphérie des premières ouvertures 32 et bord à bord avec une tôle intercalaire 36, le stoppeur 30 ayant une épaisseur supérieure à la tôle intercalaire 36 pour améliorer l'étanchéité.

Selon l' invention, le stoppeur a une résistance à la déformation variable le long de sa circonférence. Ainsi, les zones du stoppeur 30 susceptibles d'être les plus proches des deuxièmes orifices 34 ont une résistance à la déformation moins élevée que les zones les plus éloignées desdits orifices 34.

Par résistance à la déformation, on entend la capacité d'un élément à s'opposer à une déformation plastique et/ou élastique.

Avantageusement, le stoppeur a une résistance à l'écrasement variable le long de sa circonférence, les zones de moindre résistance à l'écrasement correspondant à celles de moindre résistance à la déformation.

Par résistance à l'écrasement, on entend la capacité d'un élément à s'opposer à la variation de son épaisseur lorsqu'il est soumis notamment à un effort de compression, l'épaisseur correspondant à la valeur dimensionnelle orientée selon l'effort de compression.

Cet agencement permet d'obtenir à partir d'un stoppeur d'épaisseur constante à la fabrication, des variations d'épaisseur dudit stoppeur une fois le joint de culasse pressé entre le bloc moteur et la culasse. Ainsi, ce sont les contraintes mécaniques produites au serrage qui modifient le profil du stoppeur et l'adaptent d'une part aux efforts de serrage, et d'autre part, aux formes des éléments entre lesquels ledit stoppeur est interposé à savoir les tôles extérieures, le bloc moteur et la culasse.

Le fait de prévoir une résistance à la déformation variable le long de la circonférence permet d'obtenir une pression de serrage relativement plus homogène le long de la circonférence du stoppeur, ce qui permet d'obtenir une étanchéité de bonne qualité sans avoir de contraintes et/ou de déformations localisées.

Selon un mode de réalisation, le stoppeur 30 comprend une première surface de contact 38 et une seconde surface de contact 40 susceptibles chacune de prendre appui contre une tôle extérieure, au moins l'une des surfaces 38 et/ou 40 ayant une largeur (selon la direction radiale) variable le long de la circonférence dudit stoppeur. Ainsi, les zones du stoppeur 30 pour lesquelles au moins l'une des surfaces de contact a une moindre largeur correspondent à celles de moindre résistance à la déformation.

Selon une première variante illustrée par la figure 5, les deux surfaces de contact 38 et 40 ont une largeur variable le long de la circonférence, la variation de largeur étant obtenue par un retrait de matière. Selon un mode de réalisation préféré, la surface périphérique extérieure 42 du stoppeur 30 comprend au moins un méplat, et de préférence plusieurs méplats 44 disposés dans les zones du stoppeur susceptibles d'être placées au droit des orifices 34 prévus pour les moyens de serrage.

Selon une autre variante illustré par les figures 6 à 8, seule une surface de contact 38 a une largeur réduite au niveau des zones 46 susceptibles d'être disposées au droit des orifices 34 prévus pour les moyens de serrage. Selon un mode de réalisation préféré, la variation de largeur est obtenue par déformation plastique, notamment pas écrasement, des zones 46, la surface de contact 38 conservant seulement une partie de sa largeur non déformée au niveau des zones 46. Ainsi, le stoppeur 30 qui a normalement un profil rectangulaire comme illustré sur la figure 8, a un profil en L dans les zones 46 déformées comme illustré sur la figure 7.

En raison du fluage de la matière généré par l'écrasement, les zones 46 déformées comprennent chacune une excroissance 48 au niveau de la surface périphérique extérieure 42 susceptible de coopérer avec un logement 50 ménagé au niveau de la tôle intercalaire 36, ces excroissances 48 formant des moyens d'indexation en rotation dudit stoppeur 30 facilitant sa mise en place et surtout permettant de placer de manière certaine les zones de moindre résistance à la déformation au droit des orifices 34 prévus pour les moyens de serrage.

A titre d'exemple, le stoppeur est écrasé sur environ la moitié de sa largeur et/ou de sa hauteur au niveau des zones 46 déformées et sur une longueur d'arc de cercle de l'ordre de 20 mm, ces valeurs étant susceptibles de varier en fonction notamment des caractéristiques mécaniques des éléments à étancher.

Selon les variantes, les logements 50 prévus au niveau de la tôle intercalaire 36 peuvent s'étendre sur toute l'épaisseur de ladite tôle ou bien ne s'étendre que sur une partie de l'épaisseur comme illustré sur la figure 7.

Enfin pour assurer le maintien en place du stoppeur, un matriçage ponctuel 52 de la tôle intercalaire 36 est réalisé au niveau d'au moins un logement 50 afin que le bord ponctuellement écrasé dudit logement de la tôle intercalaire maintient le stoppeur en place.

L'indexation en rotation du stoppeur et/ou son maintien en place sont particulièrement avantageux si le stoppeur 30 a un profil variable le long de sa circonférence.

Bien entendu, l'invention n'est évidemment pas limitée au mode de réalisation représenté et décrit ci-dessus, mais en couvre au contraire toutes les variantes, notamment en ce qui concerne les formes, dimensions et matériaux des différents éléments. Ainsi, les zones 46 déformées et les logements 50 correspondants peuvent ne pas être rectangulaires mais avoir une autre forme.

Enfin, on pourrait envisager un stoppeur et une tôle intercalaire d'un seul tenant, un stoppeur étant considéré comme une surépaisseur entourant les ouvertures prévues pour les chambres de combustion.

## Revendications

1. Joint de culasse susceptible d'être disposé entre un bloc moteur et une culasse, comprenant plusieurs feuilles ou tôles empilées avec au moins une ouverture (32) susceptible de coïncider avec une chambre de combustion et au moins un orifice (34) prévu pour des moyens de serrage ainsi qu'une surépaisseur, appelée par la suite stoppeur (30) entourant ladite ouverture (32), **caractérisé en ce que** le stoppeur (30) a une résistance à la déformation variable le long de sa circonférence.

2. Joint de culasse selon la revendication 1, **caractérisé en ce que** les zones du stoppeur (30) susceptibles d'être les plus proches des orifices (34) prévus pour les moyens de serrage ont une résistance à la déformation moins élevée que les zones les plus éloignées desdits orifices (34).

3. Joint de culasse selon la revendication 1 ou 2, **caractérisé en ce que** le stoppeur (30) a une résistance à l'écrasement variable le long de sa circonférence, les zones de moindre résistance à l'écrasement correspondant à celles de moindre résistance à la déformation.

4. Joint de culasse selon l'une quelconque des revendications 1 à 3, **caractérisé en ce qu'**au moins l'une des surfaces (38, 40) de contact du stoppeur (30) a une largeur, selon la direction radiale, variable le long de la circonférence dudit stoppeur.

5. Joint de culasse selon la revendication 4, **caractérisé en ce que** la surface périphérique extérieure (42) dudit stoppeur (30) comprend au moins une découpe de manière à former une zone de moindre largeur.

6. Joint de culasse selon la revendication 4, caractérisé en ce le stoppeur (30) comprend au moins une zone (46) déformée de manière à former une zone de moindre largeur.

7. Joint de culasse selon l'une quelconque des revendications 1 à 6, **caractérisé en ce que** le stoppeur (30) est disposé bord à bord avec une tôle intercalaire (36).

8. Joint de culasse selon les revendications 6 et 7, **caractérisé en ce que** la ou les zones (46) déformées comprennent chacune une excroissance (48) au niveau de la surface périphérique extérieure (42) susceptible de coopérer avec un logement (50) ménagé au niveau de la tôle intercalaire (36).

9. Joint de culasse selon la revendication 8, **caractérisé en ce que** le logement (50) comprend une déformation au niveau de son bord permettant d'assurer une liaison mécanique entre le stoppeur (30) et la tôle intercalaire (36).
